# EUROPEAN PATENT SPECIFICATION

(11) **EP 4 087 200 B1**
(45) Date of publication and mention of the grant of the patent: **10.04.2024**
(21) Application number: 21172639.3
(22) Date of filing: 07.05.2021
(51) Int. Cl.: H04W 28/08, H04L 47/283, H04W 28/02, H04W 52/02, H04W 28/12

(54) **METHOD FOR TAKING INTO ACCOUNT ENERGY INTENSITY REGARDING THE TRANSMISSION OF DATA PACKETS, AS PART OF A QUALITY-OF-SERVICE-CONTROLLED DATA CONNECTION, TOWARDS A USER EQUIPMENT, TELECOMMUNICATIONS NETWORK, PROGRAM, AND COMPUTER-READABLE MEDIUM**
VERFAHREN ZUR BERÜCKSICHTIGUNG DER ENERGIEINTENSITÄT HINSICHTLICH DER ÜBERTRAGUNG VON DATENPAKETEN, ALS TEIL EINER DIENSTQUALITÄTSGESTEUERTEN DATENVERBINDUNG, ZU EINEM BENUTZERGERÄT, TELEKOMMUNIKATIONSNETZWERK, PROGRAMM UND COMPUTERLESBARES MEDIUM
PROCÉDÉ DE PRISE EN COMPTE DE L'INTENSITÉ ÉNERGÉTIQUE CONCERNANT LA TRANSMISSION DE PAQUETS DE DONNÉES, EN TANT QUE PARTIE D'UNE CONNEXION DE DONNÉES CONTRÔLÉES PAR LA QUALITÉ DU SERVICE, VERS UN ÉQUIPEMENT UTILISATEUR, RÉSEAU DE TÉLÉCOMMUNICATIONS, PROGRAMME ET SUPPORT LISIBLE PAR ORDINATEUR

(43) Date of publication of application: 09.11.2022
(73) Proprietor: Deutsche Telekom AG, 53113 Bonn (DE)
(72) Inventor: KLATT, Axel, 50999 Köln (DE)
(74) Representative: Schwöbel, Thilo K.

(56) References cited:
- EP-A1- 2 768 256
- WO-A2-00/54437
- US-A1- 2016 135 144
- US-A1- 2019 288 953
- INTEL CORPORATION: "Sidelink Evaluation Methodology Update for UE Power Saving", 3GPP DRAFT; R1-2005895, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20200817 - 20200828 8 August 2020 (2020-08-08), XP051917797, Retrieved from the Internet: URL:https://ftp.3gpp.org/tsg_ran/WG1_RL1/T SGR1_102-e/Docs/R1-2005895.zip R1-2005895 Intel - eV2X-EM.docx [retrieved on 2020-08-08]
- HUAWEI ET AL: "Controlling ES impact on QoS", 3GPP DRAFT; R3-132078 ESCOV QOS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. San Francisco, USA; 20131111 - 20131115 1 November 2013 (2013-11-01), XP050755036, Retrieved from the Internet: URL:http://www.3gpp.org/ftp/tsg_ran/WG3_Iu /TSGR3_82/Docs/ [retrieved on 2013-11-01]

## Description

### BACKGROUND

The present invention relates inter alia to a method for taking into account energy intensity regarding the transmission of data packets, as part of a quality-of-service-controlled data connection, towards a user equipment.

Additionally, the present invention relates to a telecommunications network for taking into account energy intensity regarding the transmission of data packets as part of a quality-of-service-controlled data connection towards a user equipment.

Furthermore, the present invention relates to a program comprising a computer readable program code, and to a computer-readable medium for using an inventive telecommunications network.

The energy consumption in cellular networks, especially in new systems like 5G is comparatively high. Due to the Shannon-Hartley-Theorem, a certain minimum amount of energy per transmitted bit is and will always be necessary for realizing any (reliable) data transmission over a wireless transmission channel. Hence, as part of the global responsibility of companies and industries to meet CO₂ reduction targets, a new approach is needed.

In the context of energy-efficient data transmission US 2019/288953 A1 proposes the utilization of a packet delay budget that can be adjusted for coverage enhancement or for power saving purposes. US 2016/135144 A1 describes a method for energy saving in radio access networks in which traffic is steered towards the radio access technology (RAT) that consumes less energy-per-bit for data transmission than other RATs. 3GPP draft R3-132078 ("Controlling ES impact on QoS") proposes switching off entire cells wherein the decision whether a cell should be active or inactive is predominantly based on the type of users that might access the cell. The method described in WO 00/54437 A2 involves different policies that can be applied by the base station to determine the best way to schedule or transmit available bit rate (ABR) traffic streams in order to take advantage of the available forward link transmit power that would otherwise remain unused.

### SUMMARY

The present invention provides a method for taking into account energy intensity regarding the transmission of data packets, as part of a quality-of-service-controlled data connection, towards a user equipment on a comparatively fine-granular level, wherein by means of using, by the telecommunications network, an energy intensity-related indication, data transmission from the telecommunications network and the user equipment is able to be realized requiring less amounts of energy, resulting in a reduced overall consumption of energy involved in realizing wireless data transmission.

The object of the present invention is achieved by a method according to claim 1.

According to the present invention, it is thereby advantageously possible to specifically adjust - with fine granularity and depending on the energy intensity-related indication used by the telecommunications network - the energy consumption or energy intensity of the specifically considered wireless data transmission from the telecommunications network, or the corresponding network node (typically a base station entity) thereof, towards the user equipment while still satisfying the quality-of-service requirements as comprised by the quality-of-service indication information associated or applied to the specific data stream considered.

In modern mobile communication systems, especially cellular communication systems, there are multiple ways to provide for a transmission of data, starting from the usage of very different radio technologies of the different generations of radio access technologies (like GSM/UMTS/LTE/NB-IoT/LTE-M/5G) within public land mobile networks, but also the different variants of WiFi technology, also called wireless local area network, WLAN. This flexibility of having multiple ways or manners (or the plurality of radio access technologies or the plurality of radio signal transmission schemes) to transfer data lead to a choice or a selection of the preferred radio access technology.

In conventionally known telecommunications networks, while the high-level topic of the importance of energy consumption is known as such, the implemented wireless, especially cellular, standards overwhelmingly used today, like LTE or 5G, do not provide a specific solution or implementation that specifically also takes into account - besides other considerations - the amount of energy (or the energy intensity of the considered data transmission) used to transmit a specifically considered amount of data, or a specifically considered connection or data flow on a fine-granular level.
Any data transmission over a wireless channel requires a minimum amount of energy per bit transmitted, this principle having been outlined, already many decades ago, by Claude Shannon and Ralph Hartley in the famous and still valid Shannon-Hartley-Theorem, stating that E_{b}/N₀ > In 2, i.e. the transmission of a certain number of bits requires a minimum amount of energy (E_{b}), and, in turn, the faster the transmission of data over a non-ideal channel is, the more energy will be required (or the higher the amount of transferred data, the higher the energy consumption).
In conventionally known cellular communication systems, there are multiple ways for the transmission of data, starting from the usage of very different radio technologies (such as, e.g., GSM/UMTS/LTE/NB-IoT/LTE-M/5G, etc.) to the possibility of having very different transmission configurations within a certain radio technology (e.g. different modulation schemes, incl. higher order modulation (512/1024 QAM), redundancy, bandwidth, repetition, latency, bitrate, etc.). This flexibility conventionally allows for the configuration of data transmission with the aim of using optimum channel capacity, while on the other hand the need to minimize the energy required for such a transmission is typically not considered, especially not with fine granularity - as, conventionally, the goal always has been to increase the so-called "spectral efficiency" for the best usage of the spectrum. Under this approach, for example, 5G developed massive MIMO antenna concepts, as for example 64T64R, which are great to achieve a high spectrum efficiency in a given bandwidth, but that are, on the other hand, highly energy consuming.
Since quite some time in the development of conventional mobile communication networks (at least since LTE times), the decision, how a packet is treated or routed throughout the network - and especially via the air interface between the access network and the user equipment - is based on a quality-of-service (QoS) concept, defined in terms of QoS parameters which consist of parameters, like max. packet delay budget, packet error rate, packet priority and others [e.g. 3GPP TS 23.501 for 5G]. These parameters are signaled for a given data bearer or IP flow from the CN to the RAN, typically based on subscription or packet/service classification in the CN. The eNB (LTE) or gNB (NR) scheduler receiving packets via such bearer within a PDU session uses these parameters, especially the QCI and locally defined scheduling rules, to treat a packet appropriately based on the configured QCI.
Hence, regarding a specific amount of data, or a specific connection or data flow or stream, there is conventionally no consideration of an energy budget used, or an energy priority, neither on the device (user equipment) side nor on the network side.

According to the present invention, the network side (i.e. the base station entity, or another network node of the access network, or another network node of the telecommunications network) is involved in defining or in determining the energy-intensity to be applied to a specific amount of (downlink) data, or a specific connection or data flow or data stream. Hence, according to the present invention, the energy intensity is taken into consideration (or able to be taken into consideration) regarding the transmission of data packets, as part of a quality-of-service-controlled data connection, towards a user equipment involving at least one network node of a telecommunications network. The telecommunications network comprises or is assigned to a core network and the telecommunications network comprises or is assigned to an access network comprising a plurality of base station entities, and the user equipment is connected to a specific base station entity of the plurality of base station entities (of the access network). The data connection typically comprises or transports at least one data stream (or data flow), wherein a quality-of-service indication information is associated or applied (by a network node of the telecommunications network, especially of the core network) to each data stream.

In order for the energy intensity of such data transmissions (i.e. data transmissions as part of such a data connections) between the telecommunications network and the user equipment to be taken into consideration (or to be able to be taken into consideration) on a comparatively fine grained level, it is proposed, according to the present invention, that, in a first step, regarding a specific data stream, a specific quality-of-service indication information is associated or applied to the specific data stream, wherein the quality-of-service indication information comprises a packet delay budget information and an energy intensity-related indication, related to the energy intensity of the transmission of the data packets of the specific data stream. In a second step, subsequent to the first step, the transmission of the data packets of the specific data stream is performed dependent on the quality-of-service indication information, comprising the energy intensity-related indication and the packet delay budget information.

Hence, according to the present invention, the energy intensity-related indication (as part of the quality-of-service indication information) is advantageously used to take the energy intensity of data transmissions as part of data connections (from the telecommunications network towards the user equipment) into consideration on a comparatively fine grained level.
Hence, the present invention proposes to utilize information about an "energy budget" or an "energy priority" (as contained in the energy intensity-related indication) for the routing or the transmission of that packets. Thus, the present invention is especially related to the configuration of the quality-of-service-controlled data connection (established to transport data towards the user equipment) and the related signaling (especially between the core network of the telecommunications network and the access network of the telecommunications network by means of the energy intensity-related indication) for especially setting different "energy consumption" and/or "sustainability" profiles.

According to the present invention, it is assumed that the telecommunications network and the user equipment support the selection of a multiplicity of access technologies and/or transmission schemes. Possible access technologies in this sense are technologies using licensed or unlicensed spectrum, using techniques such GPRS/EDGE, UMTS/HSPA, LTE/LTE-A, WIFI etc. with features like higher-order modulation, power control, MIMO, beam forming, carrier aggregation, etc.

According to the present invention, the transmission of downlink data streams - from the access network towards the user equipment - requires the transmission, towards the user equipment, of the respective data packets to be scheduled by a scheduler entity or functionality as part of the base station entity connected to the user equipment, wherein the scheduling algorithm uses the energy intensity-related indication of the quality-of-service indication information, wherein the energy intensity-related indication, as well as an indication related to the available packet delay budget, is used for such scheduling regarding individual data packets of the considered data streams or especially all data streams of the considered quality-of-service-controlled data connection, wherein optionally the energy intensity-related indication corresponds to an indication whether to apply, if possible with regard to the available packet delay budget and regarding a considered data stream, a less energy intensive transmission of data packets.

Thereby, it is advantageously possible that the decision or the choice to be made (i.e. which radio access technology and/or which radio signal transmission scheme to be used in a specific situation) is based on whether the priority (as informed by the energy intensity-related indication) is directed to a preference of either a lower (or allowing for a higher) level of energy intensity. Of course, according to variants or embodiments of the present invention, a higher granularity of such a priority is possible, e.g., in the form of having three different levels of energy priority information, such as "low", "middle", "high".

According to a further preferred embodiment of the present invention, the energy intensity-related indication corresponds to at least one out of the following:
-- a quality-of-service flow parameter, especially besides other quality-of-service flow parameters like allocation and retention policy, ARP, reflective quality-of-service attribute, RQA,
-- an indication, as part of the 5G quality-of-service identifier, 5QI, or as part of the quality-of-service class identifier, QCI, and especially an indication regarding each quality-of-service class or each default priority level within the 5G quality-of-service identifier or within the quality-of-service class identifier, whether to apply, if possible with regard to the available packet delay budget and regarding a considered data stream, a less energy intensive transmission of data packets.

Thereby, it is advantageously possible that the energy intensity-related indication is able to transmitted as part of the (quality-of-service) definition of the quality-of-service-controlled data connection using a multitude of different manners. Hence, the content of the energy intensity-related indication (or the content of a plurality of pieces of energy intensity-related indication) is able to convey a fine-grained indication, e.g., as to which radio access technology and/or which radio signal transmission scheme within a radio access technology shall be used.

It is furthermore preferred according to the present invention that the (quality-of-service-controlled) data connection comprising or being segmented into
-- a first connection part between the core network or a network node thereof and the base station entity, and
-- a second connection part between the base station entity and the user equipment.

It is thereby advantageously possible to comparatively easily apply the concept of the present invention.

According to still further preferred embodiments of the present invention:
-- the data connection corresponds to a protocol data unit session, PDU session, linking the user equipment, the base station entity as a gNodeB entity or functionality, and the user plane function, UPF, as the network node of the core network
   or
-- the data connection corresponds to a packet data network connection, PDN connection, linking the user equipment, the base station entity as an eNodeB entity or functionality, and the serving gateway, SGW, as the network node of the core network.

Thereby, it is advantageously possible according to the present invention to realize the proposed method both in an LTE setup or implementation of the telecommunications network and/or the user equipment, and in a 5G setup or implementation.

According to the present invention, between the telecommunications network and the user equipment, radio resources of an air interface between the user equipment and the access network are used such that a plurality of radio access technologies and/or a plurality of radio signal transmission schemes are used for transmitting downlink data - from the radio access network towards the user equipment -, the plurality of radio access technologies and/or the plurality of radio signal transmission schemes being associated with or related to a first, lower level of energy intensity or at least a second, higher level of energy intensity, wherein dependent on the quality-of-service indication information, comprising the energy intensity-related indication,
-- either a radio access technology and/or a radio signal transmission scheme associated with the first level of energy intensity is used in case that the available packet delay budget allows for and the energy intensity-related indication indicates so,
-- or a radio access technology and/or a radio signal transmission scheme associated with the second level of energy intensity is used in case that the available packet delay budget stipulates so or in case the energy intensity-related indication indicates so to fulfill the requirements of the quality-of-service indication information regarding the considered data stream.

It is thereby advantageously possible according to the present invention to be able to adjust the energy consumption or energy intensity of a considered wireless data transmission from the telecommunications network towards the user equipment while still satisfying the quality-of-service requirements, especially with comparatively fine granularity and depending on the energy intensity-related indication used by the telecommunications network.

According to another preferred embodiment of the present invention, the energy intensity-related indication refers to the energy intensity of data transmissions between the telecommunications network and the user equipment in terms of one or a plurality of the following measures of energy intensity:
-- the energy used per data volume transmitted, such as a value of Joules required per Mbyte transmitted,
-- the energy used per bandwidth used, such as a value of Joules required per bandwidth, especially in Mbit per seconds, applied,
-- the energy used per latency realized, such as a value of Joules required per archiving a latency expressed in milliseconds,

wherein especially a first energy intensity-related indication refers to a first of such measures of energy intensity and a second energy intensity-related indication refers to a second of such measures of energy intensity,
wherein at least one of the at least one energy intensity-related indication refers to or indicates one of at least three defined different levels of energy intensity, especially of at least four different levels of energy intensity.

Thereby, it is advantageously possible according to the present invention that the energy intensity-related indication refers to different measures or to a multitude of measures and/or that the energy intensity-related indication indicates more than only two different values (such as "high(er)" or "low(er)").

The present invention also relates to a telecommunications network according to claim 8.

Thereby it is advantageously possible, that - also with respect to the telecommunications network - the energy intensity is able to be modulated or modified, especially based on a decision or preference of the user equipment's user, for a specific user equipment.

Furthermore, the present invention relates to a program according to claim 9.

The present invention also relates to a computer-readable medium according to claim 10.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a mobile communication network comprising a multitude of radio cells being served by a multitude of base station entities, and a user equipment being served by the mobile communication network.
Figure 2 schematically illustrates an exemplary representation of the transmission of data packets, as part of a quality-of-service-controlled data connection, towards a user equipment involving at least one network node of the telecommunications network.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

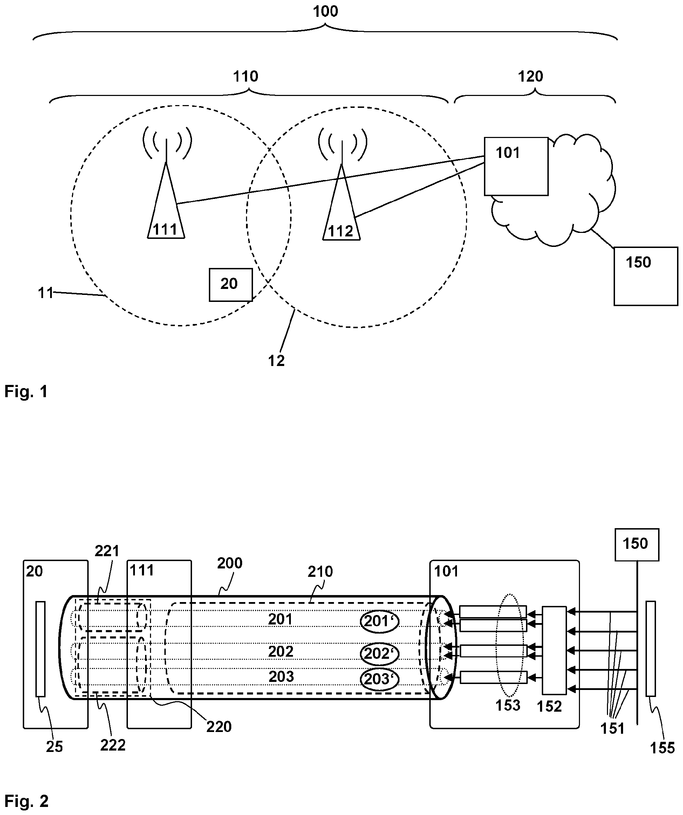

In Figure 1, a mobile communication network 100 is schematically shown. The mobile communication network 100 comprises an access network 110 and a core network 120. The mobile communication network 100 is preferably a cellular telecommunications network comprising typically a plurality of network cells (or radio cells), wherein two radio cells are represented in Figure 1 by means of reference signs 11 and 12: a first radio cell 11, and a second radio cell 12. The access network 110 comprises at least a first base station entity 111 serving the first radio cell 11, and a second base station entity 112, serving the second radio cell 12. A user equipment 20 is schematically depicted in Figure 1 as an example of a user equipment in contact to the telecommunications network 100. The user equipment 20 is connected to one of the base station entities 111, 112, in the example shown to the first base station entity 111. The mobile communication network 100 comprises a network node 101 of especially the core network 120, wherein the network node 101 is involved in establishing a quality-of-service-controlled data connection 200 (shown in Figure 2) between the telecommunications network 100 and the user equipment 20. Especially, the quality-of-service-controlled data connection 200 is a downstream (or downlink) data connection for transmitting data packets in downlink direction, i.e. from the telecommunications network 100 towards the user equipment 20.

Regarding such data transmissions between the telecommunications network 100 and the user equipment 20, the present invention provides a method (as well as a corresponding telecommunications network 100) for taking into account energy intensity regarding the transmission of data packets, as part of the quality-of-service-controlled data connection 200, towards a user equipment 20 (i.e. in downlink direction) involving the at least one network node 101 of the telecommunications network 100. The user equipment 20 is typically, at least temporarily, in communication exchange with the telecommunications network 100 using radio resources of an air interface between the user equipment 20 and the access network 110 (i.e. the respective base station entities 111, 112). Regarding this communication exchange or in order to realize this data transmission or transmissions, typically a plurality of radio access technologies and/or a plurality of radio signal transmission schemes (or also a plurality of radio signal transmission schemes as part of one (or each) radio access technology) are available or are able to be used for transmitting such downlink data, i.e. from the telecommunications network 100 towards the user equipment 20.

It is known that such a plurality of radio access technologies and/or radio signal transmission schemes (or combinations thereof) either involve a comparatively low or lower energy intensity (according to different measures to be discussed in greater detail), or otherwise involve a comparatively high or higher energy intensity - or, of course, are able to be ranked for their energy intensity. Typically, radio access technologies and/or radio signal transmission schemes (or combinations thereof) involving a lower energy intensity are less performant regarding usual quality-of-service criteria such as bandwidth, latency, error rate and the like, and vice versa, i.e. radio access technologies and/or radio signal transmission schemes (or combinations thereof) involving a higher energy intensity are more performant regarding such usual quality-of-service criteria. By means of selecting or adapting the radio access technologies and/or radio signal transmission schemes (or combinations thereof) used (for the downlink data stream towards the user equipment 20), it is advantageously possible, according to the present invention, that a corresponding scheduling functionality (or component or entity) within or as part or associated to the base station entity 111 (corresponding to (or serving) the user equipment 20) is able to modify the energy intensity on a comparatively fine-grained level.

According to the present invention, the data connection 200 comprises or transports at least one data stream, wherein a quality-of-service indication information is associated or applied to each data stream, and wherein the quality-of-service indication information (being specific for (or associated or applied to) each data connection or data stream) comprises the energy intensity-related indication. This is schematically shown in Figure 2 which shows an exemplary representation of the transmission of data packets, as part of a quality-of-service-controlled data connection 200, towards the user equipment 20 involving at least one network node 101 of the telecommunications network 100. The network node 101 is typically part of the core network 110 of the telecommunications network 100. The quality-of-service-controlled data connection 200 is established between this network node 101 and the user equipment 20 (to which communication data has to be transmitted, in the form of data packets as one data stream or data flow or as a plurality of data streams or data flows), via a corresponding base station entity of the radio access network 120 (i.e. in case of user equipment 20, the corresponding specific base station entity 111, depicted in Figure 1, in whose radio coverage area (or radio cell 11) the user equipment 20 is located).

The data to be transmitted (in downlink direction) to the user equipment 20 are typically provided, to the network node 101 (and, eventually, to the user equipment 20), by a data network 150 (or application server) which, however, is only schematically shown in Figure 2. One or a plurality of applications within or as part of (or provided by) the data network or application server 150 is or are schematically indicated, in Figure 2, by means of reference sign 155. In the example shown in Figure 2, a plurality of internet protocol flows (IP flows), collectively indicated by means of reference sign 151, are provided or transmitted, by the data network 150, to the network node 101, especially to a filtering stage 152 thereof, providing traffic flow template, TFT, filtering, typically used to guide different packet flows (of data packet streams) belonging to a particular service, service data flows, SDF, of or related to one of the applications 155. After the filtering stage 152, service data flows, collectively indicated by means of reference sign 153 (and corresponding to the internet protocol flows 151), are provided or transmitted, by or within the network node 101 to the quality-of-service-controlled data connection 200; this is also referred to as quality-of-service flow identifier insertion, QFI insertion.

As part of the quality-of-service-controlled data connection 200, one or a plurality of quality-of-service flows, or data streams, are established or realized between the network node 101 and the user equipment 20, in order to provide the information content of the respective data streams or quality-of-service flows to applications 25 of or within the user equipment 20, via the base station entity 111. In Figure 2, the exemplarily represented data connection 200 comprises three quality-of-service flows or data streams, a first data stream 201, a second data stream 202, and a third data stream 203. Each such data stream 201, 202, 203 comprises (or is associated or applied to) a quality-of-service indication information, i.e. the first data stream 201 a first quality-of-service indication information 201', the second data stream 202 a second quality-of-service indication information 202', and the third data stream 203 a third quality-of-service indication information 203'; or vice versa, i.e. the corresponding quality-of-service indication information 201', 202', 203' is associated or applied to the corresponding data stream 201, 202, 203, respectively. Typically, the quality-of-service-controlled data connection 200 comprises or is segmented into a first connection part 210 (e.g. an N3 tunnel) between the core network 120 or the network node 101 thereof and the base station entity 111, and a second connection part 220 between the base station entity 111 and the user equipment 20, the second connection part 220 of the data connection 200 especially comprising or corresponding to one or a plurality of radio data bearer(s), wherein in Figure 2, a first radio radio data bearer 221, and a second radio data bearer 222 are exemplarily shown.

According to the present invention, the data connection 200 comprises or transports at least one data stream 201, 202, 203, wherein the quality-of-service indication information 201', 202', 203' is associated or applied to each data stream 201, 202, 203, respectively, and wherein the quality-of-service indication information 201', 202', 203' (being specific for (or associated or applied to) each data connection or data stream) comprises the respective energy intensity-related indication. Especially according to the present invention, each one of the data streams 201, 202, 203 (and, hence, each one of the quality-of-service indication information 201', 202', 203') comprises its own (or associated or assigned) energy intensity-related indication, or alternatively, there is one energy intensity-related indication for each data connection 200 (i.e. as part of the same data connection 200, each data stream 201, 202, 203 (and, hence, each one of the quality-of-service indication information 201', 202', 203') comprises the identical energy intensity-related indication. In the context of the present invention and in the following, the first data stream 201 is taken as an example, and is also called the specific data stream 201. The respective (specific) quality-of-service indication information 201' comprises the energy intensity-related indication, which is related to the energy intensity, to be applied (or used), regarding the transmission of the data packets of the specific data stream 201. Hence, the transmission of the data packets of the specific data stream 201 is able to be performed dependent (also, i.e. besides other quality-of-service parameters of the quality-of-service indication information 201') on the energy intensity-related indication of the quality-of-service indication information 201'.

According to the present invention, the transmission of downlink data streams - from the access network 110 towards the user equipment 20 - requires the transmission, towards the user equipment 20, of the respective data packets to be scheduled by a scheduler entity or functionality as part of the base station entity 111 connected to the user equipment 20. According to the present invention, the involved scheduling algorithm uses the energy intensity-related indication of the quality-of-service indication information 201' in such a manner that the energy intensity-related indication, as well as an indication related to the available packet delay budget, is used for such scheduling, either regarding individual data packets of the considered data stream 201 or all data streams 201, 202, 203 of the considered quality-of-service-controlled data connection 200. Optionally, the energy intensity-related indication corresponds to an indication whether (or not) to apply, if possible with regard to the available packet delay budget and regarding the considered data stream 201, a less energy intensive transmission of data packets.

The quality-of-service indication information 201' (and, of course, also the other pieces of quality-of-service indication information 202', 203') typically comprise a certain number of quality-of-service flow parameters, such as, e.g., at least a plurality out of the following: a 5QI information (5G quality-of-service identifier information), an ARP information (allocation and retention priority information), a GFBR information (guaranteed flow bit rate information), a MFBR information (maximum flow bit rate information), a PDB information (packet delay budget information), a PER information (packet error rate information), a QFI information (quality-of-service flow identifier information), and a RQA information (reflective quality-of-service attribute information). According to the present invention, the energy intensity-related indication is able to be 'integrated' (or be part of the (specific) quality-of-service indication information 201') in different possible manners: Especially, the energy intensity-related indication is able to be part of the quality-of-service indication information 201' such that it corresponds to a quality-of-service flow parameter, especially an additional quality-of-service flow parameter, i.e. besides other quality-of-service flow parameters like the allocation and retention policy, ARP, information, or the reflective quality-of-service attribute, RQA, information. Alternatively or cumulatively, the energy intensity-related indication is able to be part of the quality-of-service indication information 201' such that it corresponds to an indication, as part of the 5G quality-of-service identifier, 5QI, information, or as part of the quality-of-service class identifier, QCI, information. Especially in the latter case, the energy intensity-related indication corresponds to an indication regarding each quality-of-service class or each default priority level within the 5G quality-of-service identifier or within the quality-of-service class identifier, whether to apply, if possible with regard to the available packet delay budget and regarding a considered data stream, a less energy intensive transmission of data packets.

Especially according to the present invention, the data connection 200 is a 5G data connection, and, thus, corresponds to a protocol data unit session, PDU session, linking the user equipment 20, the base station entity 111as a gNodeB entity or functionality, and the user plane function, UPF, as the network node 101 of the core network 120. Alternatively, the data connection 200 is an LTE data connection, and, thus, corresponds to a packet data network connection, PDN connection, linking the user equipment 20, the base station entity 111 as an eNodeB entity or functionality, and the serving gateway, SGW, as the network node 101 of the core network 120.

The energy intensity-related indication especially refers to the energy intensity of data transmissions between the telecommunications network 100 and the user equipment 20 in terms of one or a plurality of the following measures of energy intensity:
-- the energy used per data volume transmitted, such as a value of Joules required per Mbyte transmitted,
-- the energy used per bandwidth used, such as a value of Joules required per bandwidth, especially in Mbit per seconds, applied,
-- the energy used per latency realized, such as a value of Joules required per archiving a latency expressed in milliseconds.

According to the present invention, the information regarding the energy intensity-related indication needs to be transmitted to the base station entity 111, hence, eNB/gNB (base station entity) needs to know this information in order to utilize it in the scheduling decision (i.e. whether a (data) packet should be sent fast using a comparatively high energy consumption (because the delay budget is already taken to x %), or whether there is still room for a slower but more energy-friendly data transmission configuration). By applying such a scheduling decision, the energy consumption for the transmission of each individual (data) packet can be optimized and thus the overall energy consumption, minimized for the cellular system.
According to a first alternative embodiment, it is proposed to apply or to define (as the energy intensity-related indication) an additional parameter to the QoS Flow table (i.e. a quality-of-service flow parameter) as a dedicated parameter; the parameter could, e.g., be a multilevel energy priority (e.g. four levels, but not limited to four, like "1. Minimize Energy Consumption as much as possible"; "2. Minimize Energy consumption"; "3. default"; "4. Energy consumption irrelevant"). According to a second alternative embodiment, it is proposed to apply or to define (as the energy intensity-related indication) an additional parameter to the 5QI label in 5G or the QCI label in LTE with a dedicated parameter, related to the energy intensity. The meaning of such an additional parameter is similar, i.e. the parameter could, e.g., be a multilevel energy priority (e.g. four levels, but not limited to four, like "1. Minimize Energy Consumption as much as possible"; "2. Minimize Energy consumption"; "3. default"; "4. Energy consumption irrelevant").

A specific focus according to the present invention is to implement the inventive procedures and methods by means of protocol extension for 4G/5G/6G cellular systems being defined by 3GPP; however, this does not exclude to apply the same or corresponding principles and related signaling also for non-3GPP accesses, such as, e.g., WiFi being defined by IEEE 802.11.

In the future, the focus might shift from ultra-high data rates with extremely low latencies to a more (environmentally) sustainable wireless communication, taking also into account the energy intensity of the different radio access technologies and/or radio schemes involved or (predominantly) used.

## Claims

1. Method for taking into account energy intensity regarding the transmission of data packets, as part of a quality-of-service-controlled data connection (200), towards a user equipment (20) involving at least one network node (101) of a telecommunications network (100), the telecommunications network (100) comprising a core network (120) and the telecommunications network (100) comprising an access network (110) comprising a plurality of base station entities (111, 112), the user equipment (20) being connected to a specific base station entity (111) of the plurality of base station entities (111, 112), wherein the data connection (200) transports at least one data stream (201, 202, 203), wherein a quality-of-service indication information (201', 202', 203') is applied to each data stream (201, 202, 203), wherein, in order to take into account the energy intensity of data transmissions as part of such a data connection (200), the method comprises the following steps:
-- in a first step, regarding a specific data stream (201), a specific quality-of-service indication information (201') is applied to the specific data stream (201), wherein the quality-of-service indication information (201') comprises an energy intensity-related indication and a packet delay budget information, wherein the energy intensity-related indication is related to the energy intensity of the transmission of the data packets of the specific data stream (201) and wherein the packet delay budget information is related to an available packet delay budget,
-- in a second step, subsequent to the first step, the transmission of the data packets of the specific data stream (201) is performed dependent on the quality-of-service indication information (201'), comprising the energy intensity-related indication and the packet delay budget information,
wherein the transmission of data packets of downlink data streams - from the access network (110) towards the user equipment (20) - is scheduled by a scheduler entity or functionality that is part of the base station entity (111, 112) connected to the user equipment (20), the method being **characterized in that** a scheduling algorithm of the scheduler entity or functionality uses the energy intensity-related indication and the packet delay budget information of the quality-of-service indication information (201') for such scheduling,
wherein between the telecommunications network (100) and the user equipment (20), radio resources of an air interface between the user equipment (20) and the access network (110) comprising a plurality of radio access technologies and/or a
plurality of radio signal transmission schemes are used for transmitting downlink data - from the access network (110) towards the user equipment (20) -, the plurality of radio access technologies and/or the plurality of radio signal transmission schemes being associated with a first, lower level of energy intensity or at least a second, higher level of energy intensity,
wherein the scheduling algorithm uses the energy intensity-related indication of the quality-of-service indication information (201') wherein
-- either a radio access technology and/or a radio signal transmission scheme associated with the first level of energy intensity is used in case that the available packet delay budget allows for and the energy intensity-related indication indicates so,
-- or a radio access technology and/or a radio signal transmission scheme associated with the second level of energy intensity is used in case that the available packet delay budget stipulates so or in case the energy intensity-related indication indicates so to fulfill the requirements of the quality-of-service indication information (201') regarding the specific data stream (201).

2. Method according to claim 1, wherein the energy intensity-related indication, as well as the indication related to the available packet delay budget, is used for such scheduling regarding all data streams of the considered quality-of-service-controlled data connection (200).

3. Method according to one of the preceding claims, wherein the energy intensity-related indication corresponds to at least one out of the following:
-- a quality-of-service flow parameter, especially besides other quality-of-service flow parameters like allocation and retention policy, ARP, reflective quality-of-service attribute, RQA,
-- an indication, as part of the 5G quality-of-service identifier, 5QI, or as part of the quality-of-service class identifier, QCI, and especially an indication regarding each quality-of-service class or each default priority level within the 5G quality-of-service identifier or within the quality-of-service class identifier, whether to apply, if possible with regard to the available packet delay budget and regarding a considered data stream, a less energy intensive transmission of data packets.

4. Method according to one of the preceding claims, wherein the data connection (200) comprising
-- a first connection part (210) between the core network (120) and the base station entity (111), and
-- a second connection part (220) between the base station entity (111) and the user equipment (20).

5. Method according to one of the preceding claims, wherein the data connection (200) corresponds to a protocol data unit session, PDU session, linking the user equipment (20), the base station entity (111, 112) as a gNodeB entity or functionality, and the user plane function, UPF, as the network node (101) of the core network (120).

6. Method according to one of the preceding claims, wherein the data connection (200) corresponds to a packet data network connection, PDN connection, linking the user equipment (20), the base station entity (111, 112) as an eNodeB entity or functionality, and the serving gateway, SGW, as the network node (101) of the core network (120).

7. Method according to one of the preceding claims, wherein the energy intensity-related indication refers to the energy intensity of data transmissions between the telecommunications network (100) and the user equipment (20) in terms of one or a plurality of the following measures of energy intensity:
-- the energy used per data volume transmitted, such as a value of Joules required per Mbyte transmitted,
-- the energy used per bandwidth used, such as a value of Joules required per bandwidth, especially in Mbit per seconds, applied,
-- the energy used per latency realized, such as a value of Joules required per archiving a latency expressed in milliseconds,
wherein especially a first energy intensity-related indication refers to a first of such measures of energy intensity and a second energy intensity-related indication refers to a second of such measures of energy intensity,
wherein at least one of the at least one energy intensity-related indication refers to or indicates one of at least three defined different levels of energy intensity, especially of at least four different levels of energy intensity.

8. Telecommunications network (100) for taking into account energy intensity regarding the transmission of data packets as part of a quality-of-service-controlled data connection (200) towards a user equipment (20) involving at least one network node (101) of the telecommunications network (100), the telecommunications network (100) comprising a core network (120) and the telecommunications network (100) comprising an access network (110) comprising a plurality of base station entities (111, 112), the user equipment (20) being connected to a specific base station entity (111) of the plurality of base station entities (111, 112), wherein the data connection (200) transports at least one data stream (201, 202, 203), wherein a quality-of-service indication information (201', 202', 203') is applied to each data stream (201, 202, 203),
wherein, in order to take into account the energy intensity of data transmissions as part of such a data connection (200), the telecommunications network (100) is configured to apply a specific quality-of-service indication information (201') to the specific data stream (201), wherein the quality-of-service indication information (201') comprises an energy intensity-related indication and a packet delay budget information, wherein the energy intensity-related indication is related to the energy intensity of the transmission of the data packets of the specific data stream (201) and wherein the packet delay budget information is related to an available packet delay budget,
wherein the telecommunications network (100) is configured to perform the transmission of the data packets of the specific data stream (201) dependent on the quality-of-service indication information (201'), comprising the energy intensity-related indication and the packet delay budget information,
wherein the base station entity (111, 112) comprises a scheduler entity or functionality which is configured to schedule the transmission of data packets of downlink data streams from the access network (110) towards the user equipment (20), **characterized in that** a scheduling algorithm of the scheduler entity or functionality is configured to use the energy intensity-related indication and the packet delay budget information of the quality-of-service indication information (201') for such scheduling,
wherein the telecommunications network (100) is configured to use radio resources of an air interface between the user equipment (20) and the access network (110) comprising a plurality of radio access technologies and/or a plurality of radio signal transmission schemes to be used for transmitting downlink data - from the access network (110) towards the user equipment (20) -, the plurality of radio access technologies and/or the plurality of radio signal transmission schemes being associated with a first, lower level of energy intensity or at least a second, higher level of energy intensity,
wherein the scheduling algorithm is configured to use the energy intensity-related indication of the quality-of-service indication information (201') wherein
-- either a radio access technology and/or a radio signal transmission scheme associated with the first level of energy intensity is used in case that the available packet delay budget allows for and the energy intensity-related indication indicates so,
-- or a radio access technology and/or a radio signal transmission scheme associated with the second level of energy intensity is used in case that the available packet delay budget stipulates so or in case the energy intensity-related indication indicates so to fulfill the requirements of the quality-of-service indication information (201') regarding the specific data stream (201).

9. Program comprising a computer readable program code which, when executed on a computer or in part on the network node of the telecommunications network (100) and in part on the base station entity (111, 112), causes the computer or the network node of the telecommunications network (100) and the base station entity (111, 112) to perform a method according one of claims 1 to 7.

10. Computer-readable medium comprising instructions which when executed on a computer or in part on the network node of the telecommunications network (100) and in part on the base station entity (111, 112), causes the computer or the network node of the telecommunications network (100) and the base station entity (111, 112) to perform a method according one of claims 1 to 7.

## Patentansprüche

1. Verfahren zum Berücksichtigen einer Energieintensität in Bezug auf die Übertragung von Datenpaketen als Teil einer dienstgütegesteuerten Datenverbindung (200) zu einer Benutzerausrüstung (20) unter Einbeziehung mindestens eines Netzknotens (101) eines Telekommunikationsnetzes (100), wobei das Telekommunikationsnetz (100) ein Kernnetz (120) umfasst und das Telekommunikationsnetz (100) ein Zugangsnetz (110) umfasst, das mehrere Basisstationsentitäten (111, 112) umfasst, wobei die Benutzerausrüstung (20) mit einer spezifischen Basisstationseinheit (111) der mehreren Basisstationsentitäten (111, 112) verbunden ist, wobei die Datenverbindung (200) mindestens einen Datenstrom (201, 202, 203) transportiert, wobei eine Dienstgüteangabeinformation (201', 202', 203') auf jeden Datenstrom (201, 202, 203) angewendet wird, wobei das Verfahren, um die Energieintensität von Datenübertragungen als Teil einer solchen Datenverbindung (200) zu berücksichtigen, die folgenden Schritte umfasst:
- in einem ersten Schritt wird, in Bezug auf einen spezifischen Datenstrom (201), eine spezifische Dienstgüteangabeinformation (201') auf den spezifischen Datenstrom (201) angewendet, wobei die Dienstgüteangabeinformation (201') eine energieintensitätsbezogene Angabe und eine Paketverzögerungsbudgetinformation umfasst, wobei sich die energieintensitätsbezogene Angabe auf die Energieintensität der Übertragung der Datenpakete des spezifischen Datenstroms (201) bezieht und wobei sich die Paketverzögerungsbudgetinformation auf ein verfügbares Paketverzögerungsbudget bezieht,
- in einem zweiten Schritt, im Anschluss an den ersten Schritt, wird die Übertragung der Datenpakete des spezifischen Datenstroms (201) in Abhängigkeit von der Dienstgüteangabeinformation (201') durchgeführt, die die energieintensitätsbezogene Angabe und die Paketverzögerungsbudgetinformation umfasst,
wobei die Übertragung von Datenpaketen von Downlink-Datenströmen - von dem Zugangsnetz (110) zu der Benutzerausrüstung (20) - durch eine Disponiererentität oder -funktionalität disponiert wird, die Teil der Basisstationsentität (111, 112) ist, die mit der Benutzerausrüstung (20) verbunden ist,
wobei das Verfahren **dadurch gekennzeichnet ist, dass** ein Disponiererungsalgorithmus der Disponiererentität oder -funktionalität die energieintensitätsbezogene Angabe und die Paketverzögerungsbudgetinformation der Dienstgüteangabeinformation (201') für eine solche Disponierung verwendet,
wobei zwischen dem Telekommunikationsnetz (100) und der Benutzerausrüstung (20) Funkressourcen einer Luftschnittstelle zwischen der Benutzerausrüstung (20) und dem Zugangsnetz (110), die mehrere Funkzugangstechnologien und/oder mehrere Funksignalsenderegimes umfasst, zum Senden von Downlink-Daten - von dem Zugangsnetz (110) zu der Benutzerausrüstung (20) - verwendet werden, wobei die mehreren Funkzugangstechnologien und/oder die mehreren Funksignalsenderegimes mit einem ersten, niedrigeren Energieintensitätsniveau oder mindestens einem zweiten, höheren Energieintensitätsniveau verknüpft sind,
wobei der Disponiererungsalgorithmus die energieintensitätsbezogene Angabe der Dienstgüteangabeinformation (201') verwendet, wobei
- entweder eine Funkzugangstechnologie und/oder ein Funksignalsenderegime, die mit dem ersten Energieintensitätsniveau verknüpft sind, verwendet werden, falls das verfügbare Paketverzögerungsbudget dies gestattet und die energieintensitätsbezogene Angabe dies angibt,
- oder eine Funkzugangstechnologie und/oder ein Funksignalsenderegime, die mit dem zweiten Energieintensitätsniveau verknüpft sind, verwendet werden, falls das verfügbare Paketverzögerungsbudget dies festlegt oder falls die energieintensitätsbezogene Angabe dies angibt,
um die Anforderungen der Dienstgüteangabeinformation (201') in Bezug auf den spezifischen Datenstrom (201) zu erfüllen.

2. Verfahren nach Anspruch 1, wobei die energieintensitätsbezogene Angabe sowie die Angabe, die sich auf das verfügbare Paketverzögerungsbudget bezieht, für eine solche Disponierung in Bezug auf alle Datenströme der betrachteten dienstgütegesteuerten Datenverbindung (200) verwendet werden.

3. Verfahren nach einem der vorangehenden Ansprüche, wobei die energieintensitätsbezogene Angabe mindestens einem von Folgendem entspricht:
- einem Dienstgüteflussparameter, insbesondere neben anderen Dienstgüteflussparametern wie einem Reflective Quality-of-service Attribute (RQA) der Allocation and Retention Policy (ARP),
- einer Angabe, als Teil der 5G-Dienstgütekennung (5QI) oder als Teil der Dienstgüteklassenkennung (QCI), und insbesondere einer Angabe in Bezug auf jede Dienstgüteklasse oder jede Standardprioritätsstufe innerhalb der 5G-Dienstgütekennung oder innerhalb der Dienstgüteklassenkennung, ob, wenn möglich in Bezug auf das verfügbare Paketverzögerungsbudget und in Bezug auf einen betrachteten Datenstrom, eine weniger energieintensive Übertragung von Datenpaketen angewendet werden soll.

4. Verfahren nach einem der vorangehenden Ansprüche, wobei die Datenverbindung (200) umfasst:
- einen ersten Verbindungsteil (210) zwischen dem Kernnetz (120) und der Basisstationsentität (111), und
- einen zweiten Verbindungsteil (220) zwischen der Basisstationsentität (111) und der Benutzerausrüstung (20) .

5. Verfahren nach einem der vorangehenden Ansprüche, wobei die Datenverbindung (200) einer Protokolldateneinheits (Protocol Data Unit, PDU)-Sitzung entspricht, die die Benutzerausrüstung (20), die Basisstationsentität (111, 112) als gNodeB-Entität oder -Funktionalität und die Benutzerebenenfunktion (User Plane Function, UPF) als den Netzknoten (101) des Kernnetzes (120) verbindet.

6. Verfahren nach einem der vorangehenden Ansprüche, wobei die Datenverbindung (200) einer Paketdatennetz (Packet Data Network, PDN)-Verbindung entspricht, die die Benutzerausrüstung (20), die Basisstationsentität (111, 112) als eine eNodeB-Entität oder -Funktionalität und den bedienenden Gateway (Serving Gateway, SGW) als den Netzknoten (101) des Kernnetzes (120) verbindet.

7. Verfahren nach einem der vorangehenden Ansprüche, wobei sich die energieintensitätsbezogene Angabe auf die Energieintensität von Datenübertragungen zwischen dem Telekommunikationsnetz (100) und der Benutzerausrüstung (20) in Form einer oder mehrerer der folgenden Messgrößen der Energieintensität bezieht:
- die pro übertragener Datenmenge verbrauchte Energie, wie zum Beispiel ein Wert von Joules, die pro übertragenem Mbyte benötigt werden,
- die pro genutzter Bandbreite verbrauchte Energie, wie zum Beispiel ein Wert von Joules, der pro angewendeter Bandbreite, insbesondere in Mbit pro Sekunde, benötigt wird,
- die pro realisierter Latenzzeit verbrauchte Energie, wie zum Beispiel ein Wert von Joules, der pro Archivierung einer in Millisekunden ausgedrückten Latenzzeit erforderlich ist,
wobei sich insbesondere eine erste energieintensitätsbezogene Angabe auf eine erste solcher Messgrößen der Energieintensität bezieht und eine zweite energieintensitätsbezogene Angabe auf eine zweite solcher Messgrößen der Energieintensität bezieht,
wobei sich mindestens eine der mindestens einen energieintensitätsbezogenen Angaben auf eines von mindestens drei definierten verschiedenen Energieintensitätsniveaus, insbesondere von mindestens vier verschiedenen Energieintensitätsniveaus, bezieht oder diese angibt.

8. Telekommunikationsnetz (100) zum Berücksichtigen einer Energieintensität in Bezug auf die Übertragung von Datenpaketen als Teil einer dienstgütegesteuerten Datenverbindung (200) zu einer Benutzerausrüstung (20) unter Einbeziehung mindestens eines Netzknotens (101) des Telekommunikationsnetzes (100), wobei das Telekommunikationsnetz (100) ein Kernnetz (120) umfasst und das Telekommunikationsnetz (100) ein Zugangsnetz (110) umfasst, das mehrere Basisstationsentitäten (111, 112) umfasst, wobei die Benutzerausrüstung (20) mit einer spezifischen Basisstationseinheit (111) der mehreren Basisstationsentitäten (111, 112) verbunden ist, wobei die Datenverbindung (200) mindestens einen Datenstrom (201, 202, 203) transportiert, wobei eine Dienstgüteangabeinformation (201', 202', 203') auf jeden Datenstrom (201, 202, 203) angewendet wird,
wobei, um die Energieintensität von Datenübertragungen als Teil einer solchen Datenverbindung (200) zu berücksichtigen, das Telekommunikationsnetz (100) dafür konfiguriert ist, eine spezifische Dienstgüteangabeinformation (201') auf den spezifischen Datenstrom (201) anzuwenden, wobei die Dienstgüteangabeinformation (201') eine energieintensitätsbezogene Angabe und eine Paketverzögerungsbudgetinformation umfasst, wobei sich die energieintensitätsbezogene Angabe auf die Energieintensität der Übertragung der Datenpakete des spezifischen Datenstroms (201) bezieht und wobei sich die Paketverzögerungsbudgetinformation auf ein verfügbares Paketverzögerungsbudget bezieht,
wobei das Telekommunikationsnetz (100) dafür konfiguriert ist, die Übertragung der Datenpakete des spezifischen Datenstroms (201) in Abhängigkeit von der Dienstgüteangabeinformation (201') durchzuführen, die die energieintensitätsbezogene Angabe und die Paketverzögerungsbudgetinformation umfasst,
wobei die Basisstationsentität (111, 112) eine Disponiererentität oder -funktionalität umfasst, die dafür konfiguriert ist, die Übertragung von Datenpaketen von Downlink-Datenströmen von dem Zugangsnetz (110) zu der Benutzerausrüstung (20) zu disponieren,
**dadurch gekennzeichnet, dass** ein Disponiererungsalgorithmus der Disponiererentität oder -funktionalität dafür konfiguriert ist, die energieintensitätsbezogene Angabe und die Paketverzögerungsbudgetinformation der Dienstgüteangabeinformation (201') für eine solche Disponierung zu verwenden,
wobei das Telekommunikationsnetz (100) dafür konfiguriert ist, Funkressourcen einer Luftschnittstelle zwischen der Benutzerausrüstung (20) und dem Zugangsnetz (110) zu verwenden, die mehrere Funkzugangstechnologien und/oder mehrere Funksignalsenderegimes umfasst, die für die Übertragung von Downlink-Daten - von dem Zugangsnetz (110) zu der Benutzerausrüstung (20) - zu verwenden sind, wobei die mehreren Funkzugangstechnologien und/oder die mehreren Funksignalsenderegimes mit einem ersten, niedrigeren Energieintensitätsniveau oder mindestens einem zweiten, höheren Energieintensitätsniveau verknüpft sind,
wobei der Disponiererungsalgorithmus dafür konfiguriert ist, die energieintensitätsbezogene Angabe der Dienstgüteangabeinformation (201') zu verwenden, wobei
- entweder eine Funkzugangstechnologie und/oder ein Funksignalsenderegime, die mit dem ersten Energieintensitätsniveau verknüpft sind, verwendet werden, falls das verfügbare Paketverzögerungsbudget dies gestattet und die energieintensitätsbezogene Angabe dies angibt,
- oder eine Funkzugangstechnologie und/oder ein Funksignalsenderegime, die mit dem zweiten Energieintensitätsniveau verknüpft sind, verwendet werden, falls das verfügbare Paketverzögerungsbudget dies festlegt oder falls die energieintensitätsbezogene Angabe dies angibt,
um die Anforderungen der Dienstgüteangabeinformation (201') in Bezug auf den spezifischen Datenstrom (201) zu erfüllen.

9. Programm, umfassend einen computerlesbaren Programmcode, der, wenn er auf einem Computer oder teilweise in dem Netzknoten des Telekommunikationsnetzes (100) und teilweise in der Basisstationsentität (111, 112) ausgeführt wird, den Computer oder den Netzknoten des Telekommunikationsnetzes (100) und die Basisstationsentität (111, 112) veranlasst, ein Verfahren nach einem der Ansprüche 1 bis 7 durchzuführen.

10. Computerlesbares Medium, umfassend Instruktionen, die, wenn sie auf einem Computer oder teilweise in dem Netzknoten des Telekommunikationsnetzes (100) und teilweise in der Basisstationsentität (111, 112) ausgeführt werden, den Computer oder den Netzknoten des Telekommunikationsnetzes (100) und die Basisstationsentität (111, 112) veranlassen, ein Verfahren nach einem der Ansprüche 1 bis 7 durchzuführen.

## Revendications

1. Procédé permettant de prendre en compte l'intensité énergétique de la transmission de paquets de données, dans le cadre d'une connexion de données commandée par la qualité de service (200), vers un équipement utilisateur (20) impliquant au moins un noeud de réseau (101) d'un réseau de télécommunications (100), le réseau de télécommunications (100) comprenant un réseau central (120) et le réseau de télécommunications (100) comprenant un réseau d'accès (110) comprenant une pluralité d'entités de stations de base (111, 112), l'équipement utilisateur (20) étant connecté à une entité de station de base spécifique (111) parmi la pluralité d'entités de station de base (111, 112), dans lequel la connexion de données (200) transporte au moins un flux de données (201, 202, 203), dans lequel des informations d'indication de qualité de service (201', 202', 203') sont appliquées à chaque flux de données (201, 202, 203), dans lequel, afin de prendre en compte l'intensité énergétique des transmissions de données dans le cadre d'une telle connexion de données (200), le procédé comprend les étapes suivantes :
- dans une première étape, concernant un flux de données spécifique (201), des informations d'indication de qualité de service spécifiques (201') sont appliquées au flux de données spécifique (201), dans lequel les informations d'indication de qualité de service (201') comprennent une indication relative à l'intensité énergétique et des informations de budget de retard de paquets, dans lequel l'indication relative à l'intensité énergétique est liée à l'intensité énergétique de la transmission des paquets de données du flux de données spécifique (201) et dans lequel les informations de budget de retard de paquets sont liées à un budget de retard de paquets disponible,
- dans une seconde étape, consécutive à la première étape, la transmission des paquets de données du flux de données spécifique (201) est effectuée en fonction des informations d'indication de qualité de service (201'), comprenant l'indication relative à l'intensité énergétique et les informations de budget de retard de paquets,
dans lequel la transmission de paquets de données de flux de données de liaison descendante - à partir du réseau d'accès (110) vers l'équipement utilisateur (20) - est programmée par une entité ou une fonctionnalité de programmation qui fait partie de l'entité de station de base (111, 112) connectée à l'équipement utilisateur (20), le procédé étant **caractérisé en ce que**
un algorithme de programmation de l'entité ou de la fonctionnalité de programmation utilise l'indication relative à l'intensité énergétique et les informations de budget de retard de paquets des informations d'indication de qualité de service (201') pour une telle programmation, dans lequel, entre le réseau de télécommunications (100) et l'équipement utilisateur (20), des ressources radio d'une interface hertzienne entre l'équipement utilisateur (20) et le réseau d'accès (110) comprenant une pluralité de technologies d'accès radio et/ou une pluralité de schémas de transmission de signaux radio sont utilisées pour transmettre des données de liaison descendante - à partir du réseau d'accès (110) vers l'équipement utilisateur (20), la pluralité de technologies d'accès radio et/ou la pluralité de schémas de transmission de signaux radio étant associées à un premier niveau d'intensité énergétique inférieur ou à au moins un second niveau d'intensité énergétique supérieur,
dans lequel l'algorithme de programmation utilise l'indication relative à l'intensité énergétique des informations d'indication de qualité de service (201') dans lequel
- soit une technologie d'accès radio et/ou un schéma de transmission de signaux radio associés au premier niveau d'intensité énergétique sont utilisés dans le cas où le budget de retard de paquets disponible le permet et dans le cas où l'indication relative à l'intensité énergétique l'indique,
- soit une technologie d'accès radio et/ou un schéma de transmission de signaux radio associés au second niveau d'intensité énergétique sont utilisés dans le cas où le budget de retard de paquets disponible le stipule ou dans le cas où l'indication relative à l'intensité énergétique l'indique.
pour répondre aux exigences des informations d'indication de qualité de service (201') concernant le flux de données spécifique (201).

2. Procédé selon la revendication 1, dans lequel l'indication relative à l'intensité énergétique, ainsi que l'indication relative au budget de retard de paquets disponible, sont utilisées pour une telle programmation concernant tous les flux de données de la connexion de données commandée par la qualité de service (200) considérée.

3. Procédé selon l'une des revendications précédentes, dans lequel l'indication relative à l'intensité énergétique correspond à au moins parmi ce qui suit :
- un paramètre de flux de qualité de service, en particulier à côté d'autres paramètres de flux de qualité de service tels qu'un attribut de qualité de service réflecteur (reflective quality-of-service attribute, RQA) de la politique d'allocation et de rétention (allocation and retention policy, ARP),
- une indication, dans le cadre de l'identificateur de qualité de service 5G (5G quality-of-service identifier, 5QI) ou de l'identificateur de classe de qualité de service (quality-of-service class identifier, QCI), et en particulier une indication concernant chaque classe de qualité de service ou chaque niveau de priorité par défaut dans l'identificateur de qualité de service 5G ou dans l'identificateur de classe de qualité de service, du fait de savoir s'il convient d'appliquer, si possible en ce qui concerne le budget de retard de paquets disponible et en ce qui concerne un flux de données considéré, une transmission de paquets de données à moindre consommation d'énergie.

4. Procédé selon l'une des revendications précédentes, dans lequel la connexion de données (200) comprenant
- une première partie de connexion (210) entre le réseau central (120) et l'entité station de base (111), et
- une seconde partie de connexion (220) entre l'entité station de base (111) et l'équipement utilisateur (20) .

5. Procédé selon l'une des revendications précédentes, dans lequel la connexion de données (200) correspond à une session d'unité de données de protocole (protocol data unit session - session PDU) reliant l'équipement utilisateur (20), l'entité de station de base (111, 112) en tant qu'entité ou fonctionnalité gNodeB, et la fonction de plan utilisateur (user plane function, UPF) en tant que noeud de réseau (101) du réseau central (120).

6. Procédé selon l'une des revendications précédentes, dans lequel la connexion de données (200) correspond à une connexion de réseau de données par paquets (packet data network connection PDN - connexion PDN) reliant l'équipement utilisateur (20), l'entité station de base (111, 112) en tant qu'entité ou fonctionnalité eNodeB, et la passerelle de desserte (serving gateway, SGW) en tant que noeud de réseau (101) du réseau central (120).

7. Procédé selon l'une des revendications précédentes, dans lequel l'indication relative à l'intensité énergétique fait référence à l'intensité énergétique de transmissions de données entre le réseau de télécommunications (100) et l'équipement utilisateur (20) en termes d'une ou d'une pluralité des mesures suivantes de l'intensité énergétique :
- l'énergie utilisée par volume de données transmis, telle qu'une valeur de Joules requise par Mbyte transmis,
- l'énergie utilisée par largeur de bande utilisée, telle qu'une valeur de Joules requise par largeur de bande, en particulier en Mbit par seconde, appliquée,
- l'énergie utilisée par latence réalisée, telle qu'une valeur de Joules requise pour l'archivage d'une latence exprimée en millisecondes,
dans lequel en particulier une première indication relative à l'intensité énergétique fait référence à une première de ces mesures de l'intensité énergétique et une seconde indication relative à l'intensité énergétique fait référence à une seconde de ces mesures de l'intensité énergétique,
dans lequel au moins l'une de l'au moins une indication relative à l'intensité énergétique fait référence à ou indique l'un d'au moins trois niveaux différents d'intensité énergétique définis, en particulier d'au moins quatre niveaux différents d'intensité énergétique.

8. Réseau de télécommunications (100) permettant de prendre en compte l'intensité énergétique de la transmission de paquets de données, dans le cadre d'une connexion de données commandée par la qualité de service (200), vers un équipement utilisateur (20) impliquant au moins un noeud de réseau (101) du réseau de télécommunications (100), le réseau de télécommunications (100) comprenant un réseau central (120) et le réseau de télécommunications (100) comprenant un réseau d'accès (110) comprenant une pluralité d'entités de stations de base (111, 112), l'équipement utilisateur (20) étant connecté à une entité de station de base spécifique (111) parmi la pluralité d'entités de station de base (111, 112), dans lequel la connexion de données (200) transporte au moins un flux de données (201, 202, 203), dans lequel des informations d'indication de qualité de service (201', 202', 203') sont appliquées à chaque flux de données (201, 202, 203),
dans lequel, afin de prendre en compte l'intensité énergétique de transmissions de données dans le cadre d'une telle connexion de données (200), le réseau de télécommunications (100) est configuré pour appliquer des informations d'indication de qualité de service spécifiques (201') au flux de données spécifique (201), dans lequel les informations d'indication de qualité de service (201') comprennent une indication relative à l'intensité énergétique et des informations de budget de retard de paquets, dans lequel l'indication relative à l'intensité énergétique est liée à l'intensité énergétique de la transmission des paquets de données du flux de données spécifique (201) et dans lequel les informations de budget de retard de paquets sont liées à un budget de retard de paquets disponible,
dans lequel le réseau de télécommunications (100) est configuré pour effectuer la transmission des paquets de données du flux de données spécifique (201) en fonction des informations d'indication de qualité de service (201'), comprenant l'indication relative à l'intensité énergétique et les informations de budget de retard de paquets,
dans lequel l'entité station de base (111, 112) comprend une entité ou une fonctionnalité de programmation qui est configurée pour programmer la transmission de paquets de données de flux de données de liaison descendante à partir du réseau d'accès (110) vers l'équipement utilisateur (20), **caractérisé en ce qu'**un algorithme de programmation de l'entité ou de la fonctionnalité de programmation est configuré pour utiliser l'indication relative à l'intensité énergétique et les informations de budget de retard de paquets des informations d'indication de qualité de service (201') pour cette programmation,
dans lequel le réseau de télécommunications (100) est configuré pour utiliser des ressources radio d'une interface hertzienne entre l'équipement utilisateur (20) et le réseau d'accès (110) comprenant une pluralité de technologies d'accès radio et/ou une pluralité de schémas de transmission de signaux radio à utiliser pour transmettre des données de liaison descendante - à partir du réseau d'accès (110) vers l'équipement utilisateur (20) - la pluralité de technologies d'accès radio et/ou la pluralité de schémas de transmission de signaux radio étant associées à un premier niveau d'intensité énergétique inférieur ou à au moins un second niveau d'intensité énergétique supérieur,
dans lequel l'algorithme de programmation est configuré pour utiliser l'indication relative à l'intensité énergétique des informations d'indication de qualité de service (201') dans lequel
- soit une technologie d'accès radio et/ou un schéma de transmission de signaux radio associés au premier niveau d'intensité énergétique sont utilisés dans le cas où le budget de retard de paquets disponible le permet et dans le cas où l'indication relative à l'intensité énergétique l'indique,
- soit une technologie d'accès radio et/ou un schéma de transmission de signaux radio associés au second niveau d'intensité énergétique sont utilisés dans le cas où le budget de retard de paquets disponible le stipule ou dans le cas où l'indication relative à l'intensité énergétique l'indique.
pour répondre aux exigences des informations d'indication de qualité de service (201') concernant le flux de données spécifique (201).

9. Programme comprenant un code de programme lisible par ordinateur qui, lorsqu'il est exécuté sur un ordinateur ou en partie sur le noeud de réseau du réseau de télécommunication (100) et en partie sur l'entité de station de base (111, 112), amène l'ordinateur ou le noeud de réseau du réseau de télécommunication (100) et l'entité station de base (111, 112) à exécuter un procédé selon l'une des revendications 1 à 7.

10. Support lisible par ordinateur comprenant des instructions qui, lorsqu'elles sont exécutées sur un ordinateur ou en partie sur le noeud de réseau du réseau de télécommunication (100) et en partie sur l'entité station de base (111, 112), amènent l'ordinateur ou le noeud de réseau du réseau de télécommunication (100) et l'entité station de base (111, 112) à exécuter un procédé selon l'une des revendications 1 à 7.
